Europäisches Patentamt

(19) European Patent Office  (11) Publication number: **0 364 063**
Office européen des brevets  **A2**

(12) **EUROPEAN PATENT APPLICATION**

(21) Application number: **89303627.7**  (51) Int. Cl.5: **F16H 3/72**

(22) Date of filing: **12.04.89**

(30) Priority: **11.10.88 KR 1669788**

(43) Date of publication of application:
**18.04.90 Bulletin 90/16**

(84) Designated Contracting States:
**DE ES FR GB IT NL SE**

(71) Applicant: **Sung, Whan Kim**
**Dong Shin Apt. 2-206 1509-1, Seocho-3-dong**
**Seocho-ku Seoul(KR)**

(72) Inventor: **Sung, Whan Kim**
**Dong Shin Apt. 2-206 1509-1, Seocho-3-dong**
**Seocho-ku Seoul(KR)**

(74) Representative: **Cheyne, John Robert**
**Alexander Mackenzie et al**
**HASELTINE LAKE & CO. 28 Southampton**
**Buildings Chancery Lane**
**London WC2A 1AT(GB)**

(54) **Variable speed change gear for automobiles.**

(57) A variable speed change gear for automobiles in which the speed of the output shaft can be variably changed by variable change of the rotary speed of the gear pump by controlling the oil exit quantity in the gear pump by a valve, thereby permitting simplification of the construction of a variable speed change gear.

Fig. 1

# VARIABLE SPEED CHANGE GEAR FOR AUTOMOBILES

The present invention relates to a variable speed change gear for automobiles.

Conventional variable speed change gears are relatively complicated in construction. Accordingly, the production costs are high so that the marketability is low.

The present invention relates to a variable speed change gear in which the construction is simplified more than in conventional variable speed change gears so that the oil exit quantity in the gear pump can be controlled by a valve to variably change the rotary speed of the gear pump (by variable manipulation of the revolution of the planetary gear) in order to variably change the rotary speed of the output shaft.

For a better understanding of the present invention and to show how it may be carried into effect reference will now be made, by way of example, to the accompanying drawings in which:

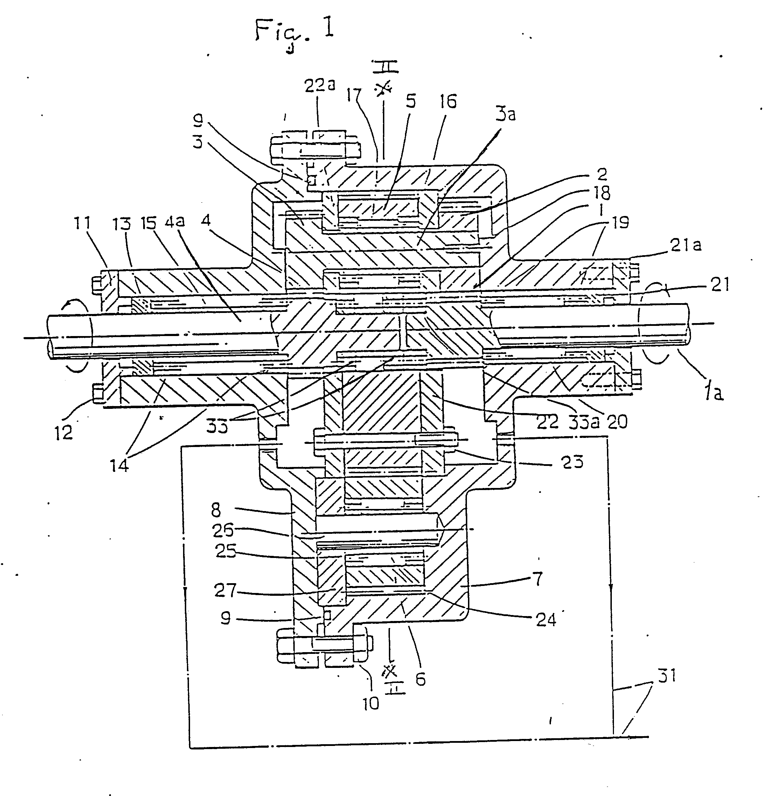

Figure 1 is a vertical sectional view of the variable speed change gear according to the present invention; and

Figure 2 is a sectional view along line II-II in Figure 1.

The variable speed change gear according to the present invention will be explained as follows:

Numeral 1 is a sun gear formed integrally with a rotary input shaft 1a, and 2 is a planetary gear which is engaged with and revolves around the sun gear 1. The planetary gear 2 is secured by a key 15 on a planetary shaft 3a which has the other planetary gear 3 nonrotatably secured thereon, thereby allowing rotation and revolution of the planetary gears 2 and 3 about the axis of input shaft 1a.

The rotations of the planetary gears 2 and 3 are achieved by the sun gear 1, and the revolution of the planetary gears 2 and 3 around the axis of shaft 1a is achieved by a valve 28 which controls the quanity of oil exiting a gear pump. Bearings 19 rotatably support input shaft 1a on a housing 7. Oil leakage is prevented by an oil seal 21, and a bearing cover 21a protects the oil seal 21.

The shaft 3a is rotatably supported by bearings 16, which bearings 16 are located at an eccentric position on a pumping gear 5. The pumping gear 5 is mounted on bearings 33 and 33a which in turn are mounted on output shaft 4a and input shaft 1a, whereby the gear 5 rotates about the axes of shafts 1a and 4a due to revolution of planet shaft 3a.

To opposite sides of the pumping gear 5, steel plate covers 22 and 22a having an outside diameter the same as that of the pumping gear 5 are secured by bolts-and-nuts 23 so as to snugly but slidably contact the inner circumferential face of the casing 7 to allow said covers to rotate with the pumping gear 5, which in turn rotates a pumping gear 6. The plate covers 22 and 22a rotatably slide on an inner circumferential groove of the casing 7. The pumping gear 6 is rotatably supported by a bearing 25 and is surrounded by the casing 7. A cover plate 27 slidably contacts one end of gear 6. The bearing 25 is mounted on a shaft 26 of which the ends are fixed to the casing 7 and the cover plate 27.

A sun gear 4 is integrally formed with an output shaft 4a, and this output shaft 4a is supported by bearings 14 on a casing cover 8. The casing 7 and cover 8 are secured with each other by bolts-and-nuts 10.

The planetary gear 3 revolutes around the sun gear 4 of the output shaft 4a during rotation of the planetary gear 3, and the pumping gear 5 and covers 22 and 22a rotate due to support on the bearings 33 and 33a.

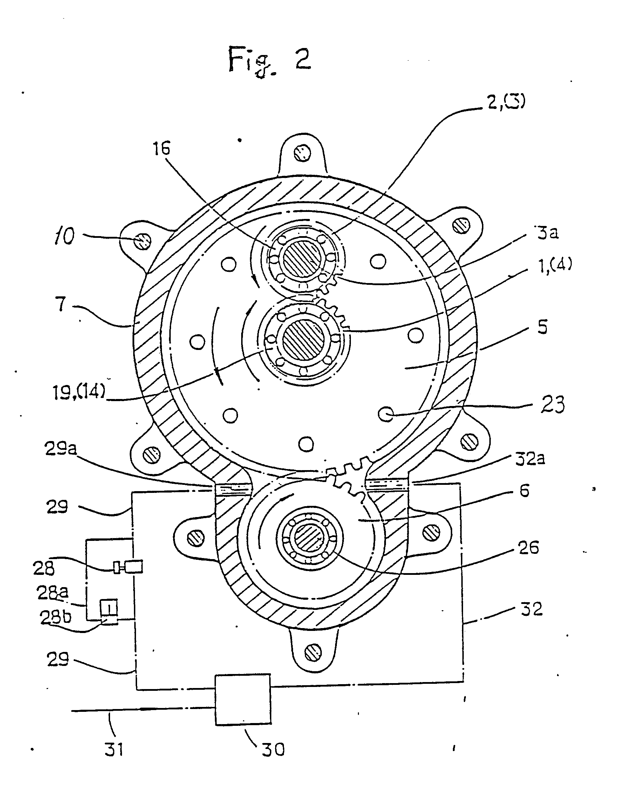

The space between casing 7 and casing cover 8 is filled with oil. An oil exit 29a and an oil inlet 32a are formed at a right and left side of the position at which the said gears 5 and 6 are meshed with each other as shown in Figure 2.

Oil exiting from oil exit 29a is circulated to the oil inlet port 32a via piping 29, valve 28, oil tank 30 and circulation piping 32. The valve 28 is designed to be quickly opened when it has to be opened and to be slowly closed when it has to be closed. The oil tank 30 contains oil volume expanded or contracted by temperature changes. Further piping 31 is connected to the oil tank 30 in order to prevent oil from leaking from the casing 7 when the gear pump is working. A safety valve 28b is connected within a bypass pipe 28a which is connected between the oil exit piping 29 upstream of valve 28 and the exit piping 29 downstream of valve 28. The safety valve 28b is opened in the direction of the oil tank 30 when exit pressure of oil from the pump exceeds a definite pressure for the purpose of bypassing oil, thereby increasing accelerations slowly and minimizing shock on the output shaft 4a if the rotation velocity of the input shaft 1a suddenly becomes high such as by urgent stepping on accelerator.

The variable speed change of the output shaft 4a according to the present invention will be explained as follows:

The planetary gear 2 revolves around the sun gear 1 while the planetary gear 2 rotates due to rotation of the input shaft 1a and, simultaneously, the planetary gear 3 revolves around the sun gear 4 of the output shaft 4a (the planetary gear 3 revolves around the sun gear 4 of the output shaft 4a while the sun gear 3 rotates since the output shaft 4a is highly loaded when a stopped automobile is driven).

At this time, the valve 28 is being opened, and then, if the driver frees the brake pedal for the purpose of starting rotation of the output shaft 4a, the valve starts to close. Further, if the driver increases the rotation-velocity of the sun gear 1 of the input shaft 1a by depressing the accelerator, the valve 28 connected to the oil exit 29a of the gear pump is successively closed and then the rotation velocities of pumping gears 5 and 6 and the revolution velocities of planetary gears 3 and 2 are decreased while high oil pressure supplied to exit 29a is produced and, simultaneously, their rotational velocities are increased and then the rotational velocity of the output shaft 4a becomes high. Further, the gears 5 and 6 for pumping are stopped when the valve 28 is completely closed, and at this time, the rotational velocity of the output shaft 4a reaches its peak, and the rotational velocity of the output shaft 4a becomes a maximum speed by variable increasing of speed by producing a maximum speed of the engine by the accelerator.

The relation of rotation ratio of the sun gear 4 of the output shaft 4a with a speed change ratio according to the rotation and revolution of the planetary gear 3 will be shown as follows:

Number of teeth of planetary gear 3 is N, number of teeth of sun gear 4 is M, number of revolutions of planet gear 3 around the sun gear 4 during one rotation of the planetary gear 3 is Y (revolution is controlled by opened and closed degrees of the valve 28), and number of rotations of the sun gear 4 during one rotation of the planetary gear 3 is K, so that $K = \frac{N}{M} - Y$.

In the above expression, if the sun gear 4 does not rotate when the planet gear 3 rotates and revolves, the number of revolution $Y = \frac{N}{M}$, the reduction gear ratio shall be large, and the reduction gear ratio would become gradually lower if the number of revolutions becomes lower and the output shaft's rotation starts, and the number of revolution $Y = O$ if the valve 28 is closed, and the number of rotations of the sun gear 4 becomes maximum.

At this time, the maximum number of rotations of the sun gear 4 means the number of rotations of the sun gear 4 when the planetary gear 3 rotates 1 revolution, so that it is understood that the running speed of the automobile can be variably increased up to a maximum speed when the speed of the engine is increased by depressing the accelerator.

Accordingly, the number of teeth of a passive drive gear engaged with a drive pinion of a propeller shaft can be decreased if the number of teeth of the planetary gear 2 is increased more than that of the sun gear 1 of the input shaft 1a by means of connecting forward, backward and neutral devices of an automobile with the output shaft of the present invention and connecting a crank shaft of the automobile engine with the input shaft 1a of the present invention.

According to the present invention, a conventional clutch which is provided between a crank shaft and a speed change gear can be eliminated so that production cost of an automobile can be cut down, and further production of an automobile can be simplified.

Besides, the numbers of teeth on the sun gears 1 and 4 and the numbers of teeth on the planetary gears 2 and 3 can be optionally selected.

Although a particular preferred embodiment of the invention has been disclosed in detail for illustrative purposes, it will be recognized that variations or modifications of the disclosed apparatus, including the rearrangement of parts, lie within the scope of the present invention.

## Claims

1. A variable speed change gear characterized in that a planetary gear is set so as to be rotated and to be revoluted around a sun gear of an input shaft by the rotation of the sun gear of the input shaft, and said planetary gear is mounted on the shaft of a planetary gear so as to allow the planetary gear to rotate and revolute around a sun gear of a input shaft, and the shafts of the planetary gear are eccentrically set to the center of a pumping gear so as to rotate the pumping gear by virtue of the revolution of the planetary gears, and a pumping gear is geared with the pumping gear to form a gear pump, further, cover plates are secured to both sides of the pumping gear by bolt nut so as to be contacted closely to a casing in order to form a high-pressure gear pump, and a cover plate is set between the pumping gear and the casing to prevent oils in the gear pump maximally from leaking, and the oil from an oil outlet is slowly closed by the valve when accelerated and is quickly opened when braked for the purpose of controlling the rotation of pumping gear of the oil gear pump, namely, controlling the revolution of the planetary gear to variably change the speed of the sun gear of the output shaft up to maximum speed.

2. A variable speed change gear comprising a first planetary gear which rotates and revolves around a sun gear of an input shaft due to rotation of the sun gear, said first planetary gear being mounted on a shaft which mounts thereon a second planetary gear which rotates and revolves around a sun gear of an output shaft, and the shaft of the planetary gears is mounted on a first pumping gear eccentrically from the center thereof so as to rotate the first pumping gear by virtue of the revolution of the planetary gears, and a second pumping gear is meshed with the first pumping gear to form an oil gear pump, cover plates secured to both sides of the first pumping gear so as to closely contact a casing in order to form a high-pressure gear pump, and a further cover plate positioned between the second pumping gear and the casing to prevent oil in the gear pump from leaking, an oil inlet and an oil exit in the casing, and valve means for controlling flow of oil through the oil exit for controlling the rotation of the pumping gears of the gear pump and for controlling the revolution of the planetary gears to variably change the speed of the sun gear of the output shaft.

3. An epicyclic gear mechanism comprising a sun gear, a planet gear meshing with the sun gear, and a rotatable planet carrier on which the planet gear is rotatably carried, braking means being provided for selectively braking the planet carrier to alter the transmission ratio of the mechanism, characterised in that the planet carrier comprises a pumping gear which meshes with a second pumping gear to provide a pump, the braking means being adapted to vary the load on the pump.

Fig. 1

# Fig. 2